(19) Europäisches Patentamt
European Patent Office
Office européen des brevets

(11) **EP 4 560 578 A1**

(12) **EUROPEAN PATENT APPLICATION**

(43) Date of publication:
**28.05.2025 Bulletin 2025/22**

(21) Application number: **24214883.1**

(22) Date of filing: **22.11.2024**

(51) International Patent Classification (IPC):
**G06T 11/00** $^{(2006.01)}$     **G06T 5/60** $^{(2024.01)}$
**G06T 5/70** $^{(2024.01)}$

(52) Cooperative Patent Classification (CPC):
**G06T 11/00; G06T 5/60; G06T 5/70;**
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.11.2023 US 202363602012 P**

(71) Applicant: **Google LLC**
**Mountain View, CA 94043 (US)**

(72) Inventors:
• **MATTHEWS, Mark Jeffrey**
**Mountain View, 94043 (US)**
• **SHARMA, Prafull**
**Mountain View, 94043 (US)**

• **LAGUN, Dmitry**
**Mountain View, 94043 (US)**
• **JIA, Xuhui**
**Mountain View, 94043 (US)**
• **LI, Yuanzhen**
**Mountain View, 94043 (US)**
• **JAMPANI, Varun**
**Mountain View, 94043 (US)**
• **FREEMAN, William Tafel**
**Mountain View, 94043 (US)**

(74) Representative: **Kennedy, Richard E. et al**
**Venner Shipley LLP**
**5 Stirling House**
**Stirling Road**
**The Surrey Research Park**
**Guildford GU2 7RF (GB)**

(54) **EDITING CONTROL OF MATERIAL PROPERTIES WITH DIFFUSION MODELS**

(57)     Provided are systems and methods for controlling material attributes such as roughness, metallic, albedo, and transparency in real images. This method leverages the generative prior of text-to-image models known for their photorealistic capabilities, offering an alternative to traditional rendering pipelines. As one example, the technology can be used to alter the appearance of an object in an image, making it appear more metallic or changing its roughness to create a more matte or glossy finish. This can be particularly useful in various fields where the ability to manipulate the appearance of products in images can be a powerful tool.

FIG. 1

EP 4 560 578 A1

**Description**

FIELD

The present disclosure relates generally to image generation machine learning models. More particularly, the present disclosure relates to systems and methods that enable a diffusion model to edit a material property of an object in an image.

BACKGROUND

Image editing is a valuable tool in various fields such as computer graphics and associated applications. One possible subject of image editing is the material properties of object(s) depicted in an image.

Material properties determine the appearance of objects in an image, for example affecting how light interacts with the surface of the object. The ability to precisely control these attributes can offer a powerful tool for image editing, allowing the manipulation of object appearance in digital images to achieve specific aesthetic or analytical outcomes.

However, achieving fine-grained control over material attributes in images presents significant challenges. Traditional methods often rely on complex rendering pipelines that require detailed auxiliary information, such as explicit 3D geometry, depth maps, environment maps, and material annotations. These methods typically involve an inverse rendering approach to disentangle and estimate complex scene attributes for material modification. Such processes can be computationally intensive and are not always accurate or efficient, limiting the practical applications of these methods.

Furthermore, a key challenge in manipulating material properties is the scarcity of real-world datasets with precisely labeled material properties. Without such datasets, it is difficult to generalize from supervised training, making it challenging to develop models capable of accurately manipulating material properties in real-world images. Additionally, there is an inherent disconnect between the discrete nature of words (used in textual descriptions) and the continuous nature of material parameters. This disconnect complicates the process of encoding fine-grained details about the material into text-to-image models, making it difficult to achieve precise control over material properties.

SUMMARY

Aspects and advantages of embodiments of the present disclosure will be set forth in part in the following description, or can be learned from the description, or can be learned through practice of the embodiments.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a computer-implemented method to train a diffusion model to perform visual editing of material properties. The computer-implemented method includes obtaining, by a computing system which may include one or more computing devices, a pair of training images, where the pair of training images may include a target image and a context image, where the target image and the context image may each depict a shared object, and where a material property of the shared object may differ between the target image and the context image. The method also includes adding, by the computing system, a set of noise to the target image to obtain a noised target image. The method also includes processing, by the computing system, the noised target image with a denoising diffusion model that is conditioned on the context image to generate a denoising prediction. The method also includes evaluating, by the computing system, a loss function that evaluates the denoising prediction relative to the set of noise. The method also includes modifying, by the computing system, one or more values of one or more parameters of the denoising diffusion model based on the loss function. Other embodiments of this aspect include corresponding computer systems, apparatus, and computer programs recorded on one or more computer storage devices, each configured to perform the actions of the methods.

Example implementations may include any combination of one or more of the following features. The computer-implemented method, where the denoising diffusion model may be further conditioned on a textual prompt that indicates an edit to the material property. The denoising diffusion model may be further conditioned on a scalar edit value for the material property, where the scalar edit value corresponds to the material property exhibited by the target image. The scalar edit value may be provided to the denoising diffusion model in an additional input channel. The pair of training images may have been generated using a physically-based renderer, where the physically-based renderer may include a shader, and where the shader may have been supplied with different values for the material property of the shared object when rendering the target image and the context image. The material property may include one or more of roughness, metallic property, albedo, and transparency. The denoising diffusion model may include a latent diffusion model and the set of noise is added in a latent space. The shader may have been supplied with a value of zero for the material property of the shared object when rendering the context image. Implementations of the described techniques may include hardware, a method or process, or computer software on a computer-accessible medium.

One general aspect includes a computing system. The computing system includes one or more processors. The system also includes one or more non-transitory computer-readable media that collectively store a denoising diffusion model configured to perform visual edits to a material property of an object depicted in a context image. The media also store instructions that, when executed by the computing system, cause the computing system to perform operations. The operations include receiving the context image. The operations include processing an input with the denoising diffusion model to generate an edited image, where the denoising diffusion model is conditioned on the context image, and where the edited image depicts the object with a modified material property. The operations include providing the edited image as an output. Other embodiments of this aspect include computer-implemented methods and/or corresponding computer systems, apparatus, and computer programs recorded on one or more computer storage devices, each configured to perform the operations.

Example Implementations may include any combination of one or more of the following features. The computing system where the denoising diffusion model may have been trained according to the methods described herein. The input may include a noise input and one or both of: a textual prompt that describes an edit to the material property; and a scalar edit value for the material property. The input may include the scalar edit value, and where the scalar edit value may be provided to the denoising diffusion model in an additional input channel. The material property may include one or more of roughness, metallic property, albedo, and transparency. Implementations of the described techniques may include hardware, a method or process, or computer software on a computer-accessible medium.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

Figure 1 depicts a graphical diagram of an example process for generating training data according to example embodiments of the present disclosure.

Figure 2 depicts a graphical diagram of an example process for training a denoising diffusion model according to example embodiments of the present disclosure.

Figure 3 depicts a graphical diagram of an example process for using a trained diffusion model to perform material edits according to example embodiments of the present disclosure.

Figure 4A depicts a block diagram of an example computing system according to example embodiments of the present disclosure.

Figure 4B depicts a block diagram of an example computing device according to example embodiments of the present disclosure.

Figure 4C depicts a block diagram of an example computing device according to example embodiments of the present disclosure.

Reference numerals that are repeated across plural figures are intended to identify the same features in various implementations.

DETAILED DESCRIPTION

Overview

The present disclosure provides systems and methods for controlling material attributes in real images. This method leverages the generative prior of text-to-image models known for their photorealistic capabilities, offering an alternative to traditional rendering pipelines. As one example, the technology can be used to alter the appearance of an object in an image, making it appear more metallic or changing its roughness to create a more matte or glossy finish. This can be particularly useful in various fields where the ability to manipulate the appearance of products in images can be a powerful tool.

The technology described in the present disclosure overcomes two main challenges associated with manipulating material properties in pixel space using a pretrained text-to-image model. The first challenge is the scarcity of real-world datasets with precisely labeled material properties. To address this, example implementations of the present disclosure can generate and/or use a synthetic dataset featuring physically-based materials and environment maps. This provides the necessary fine-grained annotations of material properties.

The second challenge is the inherent disconnect between the discrete nature of words and the continuous nature of material parameters. To overcome this, some example implementations of the present disclosure can employ extra input channel(s) to an off-the-shelf diffusion model. This model can be refined with an instruction-based process. For example, the model could be instructed to increase the metallic property of an object in an image by a certain amount represented using a scalar edit value, and the model would then adjust the appearance of the object accordingly.

Thus, the present disclosure introduces an image-to-image diffusion model which features parametric control of low-level material properties. This model can be applied to perform smooth edits of roughness, metallic, albedo, transparency, shininess, incandescence, ambient, gloss tint, or other attributes (e.g., other parameters that can be manipulated on a shader). As one example, the technology could be used to gradually increase the roughness of an object in an image, resulting in a smooth transition from a glossy to a matte finish.

In addition to the image-to-image diffusion model, the present disclosure describes the creation of a synthetic dataset of fine-grained material edits. An example dataset can be generated using 100 3D objects and randomized environment maps, cameras, and base materials. For instance, the technology could use this dataset to train a model to alter the appearance of a variety of different objects in a range of different lighting conditions.

Despite being trained on synthetic data, the model described in the present disclosure is able to generalize the control of material properties to real input images. This offers a solution to the issue of continuous control. For example, the technology could be used to alter the appearance of a real image of a wooden object, making it appear as if it were made of metal.

More particularly, one example aspect of the present disclosure is directed to a computer-implemented method to train a diffusion model for visual editing of material properties. This method can be used in various applications such as image editing, video editing, and computer graphics. For instance, in image editing, the technology can be used to change the material properties of an object in an image, such as making a metal object appear to be made of wood. In video editing, the technology can be used to change the material properties of an object in a video frame, such as making a glass object appear to be made of plastic. In computer graphics, the technology can be used to change the material properties of a 3D model, such as making a brick wall appear to be made of marble.

Example implementations of the training approach can operate over a number of training iterations. As one example, at each training iteration, a computing system can begin by obtaining a pair of training images. These images depict a shared object, but the material property of the shared object differs between the target image and the context image. For example, the target image could depict a wooden chair while the context image depicts the same chair but made of metal. This technique can be used with a variety of material properties, such as roughness, metallic property, albedo, and transparency.

The computing system then adds a set of noise to the target image to obtain a noised target image. The purpose of adding the noise is to provide a challenge for the denoising diffusion model, which must learn to remove the noise while preserving the underlying image.

The noised target image is then processed with a denoising diffusion model that is conditioned on the context image to generate a denoising prediction. The model is trained to generate a prediction that is as close as possible to the original target image, despite the added noise. Specifically, the model can be trained to predict the noise that should be removed from the noised target image to arrive at the original target image.

Next, the computing system can evaluate a loss function that evaluates the denoising prediction relative to the set of noise. This loss function can be any function that measures the difference between the denoising prediction and the set of noise, such as the mean squared error or the perceptual error (e.g., SSIM, LPIPS). The loss function provides a measure of how well the denoising diffusion model is performing.

The computing system then modifies one or more values of one or more parameters of the denoising diffusion model based on the loss function. This modification can be performed using any type of optimization algorithm, such as stochastic gradient descent or adaptive gradient descent with momentum (ADAM). The goal of this step is to improve the performance of the denoising diffusion model by adjusting its parameters.

In some implementations, the denoising diffusion model can also be conditioned on a textual prompt that indicates an edit to the material property. For example, the textual prompt could be "change the metallic property of the chair ". This feature allows the user to specify the desired edit in a natural language format, making the technology more user-friendly.

Additionally or alternatively, the denoising diffusion model can also be conditioned on a scalar edit value for the material property, which corresponds to the material property exhibited by the target image. For example, if the material property is roughness, the scalar edit value could be a number that represents the roughness of the target image. This feature provides a quantitative measure of the material property, allowing for more precise edits.

In some implementations, the scalar edit value can be provided to the denoising diffusion model in an additional input channel. This channel can be a separate input to the model, or it can be combined with the input image in some way, such as by concatenating the scalar edit value with the pixel values of the image. This feature allows the model to take into account the scalar edit value when generating its prediction.

As described herein, the pair of training images can be generated using a physically-based renderer, which includes a shader. The shader can be supplied with different values for the material property of the shared object when rendering the target image and the context image. This feature allows for the generation of realistic training images, which can improve the performance of the denoising diffusion model.

Once trained, a computing system can use the denoising diffusion model to perform visual edits to a material property of an object depicted in a context image. For example, a user can supply a context image that depicts an object. The user can provide a textual prompt and/or scalar edit value that indicates a desired edit to one or more of the material properties of the object. The denoising diffusion model can process a noisy input that includes the textual prompt and/or scalar edit value, while being conditioned on the context image, to generate an edited image that depicts the object with a modified material property (e.g., modified in accordance with the textual prompt and/or scalar edit value).

The systems and methods of the present disclosure provide a number of technical effects and benefits. As one example, the proposed technology presents a technical solution to the complex problem of manipulating material properties of objects in images. Traditional methods often require extensive auxiliary information such as explicit 3D geometry, depth maps, and material annotations to estimate object and scene-level properties. The disclosed method, however, bypasses this process by operating directly in pixel space, using the generative prior of text-to-image models. This eliminates the necessity of detailed auxiliary information, which is a significant technical advancement in the field of image manipulation. The proposed approach is also significantly computationally cheaper than traditional methods, thereby conserving computational resources such as processor cycles, memory space, etc.

Another technical problem is the scarcity of real-world datasets with precisely labeled material properties. This challenge is addressed through the creation of a synthetic dataset featuring physically-based materials and environment maps. This solution is particularly innovative as it overcomes the challenge of generalizing from supervised training in a domain where fine-grained annotations of material properties are scarce.

Another technical problem addressed is the disconnect between the discrete nature of words and the continuous nature of material parameters. To solve this, extra input channels can be employed to an off-the-shelf diffusion model, refining this model with an instruction-based process. This technical solution provides a mechanism for fine-grained control over material properties, a feature lacking in existing text-to-image models.

Thus, the present disclosure introduces a novel image-to-image diffusion model for parametric control of low-level material properties. This technical solution enables smooth and precise edits of material properties such as roughness, metallic, albedo, and transparency. This level of control is a significant advancement in the field and offers a practical solution to the technical problem of manipulating material attributes in pixel space.

The proposed technology has a wide array of potential applications. For instance, in the film and gaming industries, this technology could improve graphic design processes by enabling more efficient and precise adjustments to material properties, enhancing realism and visual appeal. The technology could also be beneficial in virtual and augmented reality applications, where real-time manipulation of material properties can enhance user interaction and immersion. Furthermore, in the field of interior design and architecture, the proposed technology can be used for virtual staging and previews, allowing clients to visualize different materials and finishes in a given space.

Example Dataset Generation

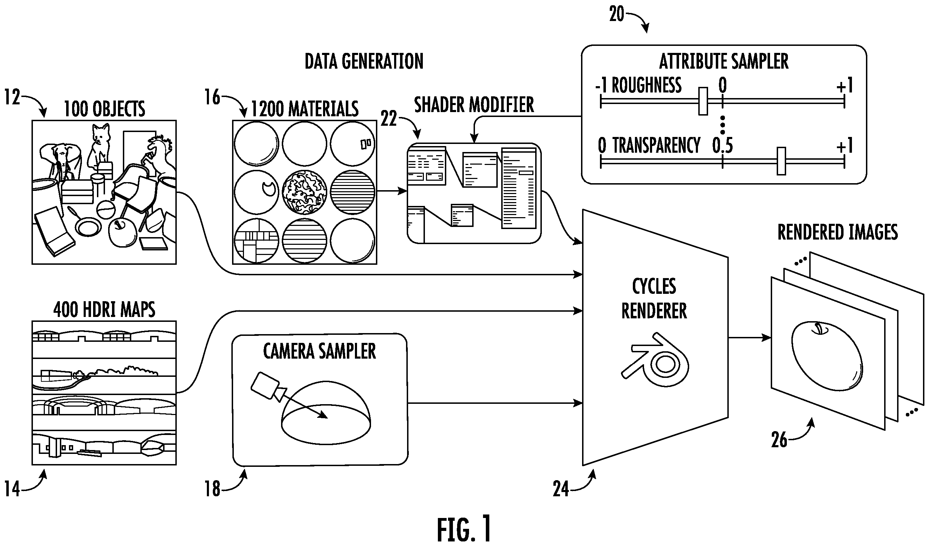

Figure 1 provides a conceptual illustration of an example process for generating training data, according to an embodiment of the present disclosure. The process begins with a set of objects 12, environments 14, and materials 16. These assets may be stored in a database or other suitable storage medium. The objects 12 represent three-dimensional (3D) models of various objects such as, for example, a chair, a table, or a car. The environments 14 represent different lighting and environmental conditions, and the materials 16 represent different types of materials that have different material properties (e.g., metallic, albedo, roughness, transparency).

The process further includes a camera sampler 18, which is configured to generate different camera viewpoints and intrinsics for each object. The camera sampler 18 can randomly select different positions, orientations, and other camera parameters to generate a variety of views of each 3D object. This increases the diversity of the training data and allows the trained model to generalize better to different views of the same object.

The attribute sampler 20 is configured to generate different attribute values for each of a number of material properties. For example, The attribute sampler 20 can randomly select different values for each material attribute, such as roughness, metallic, albedo, and transparency. Each attribute defines a specific property of the material, and by varying these attributes, the appearance of the objects in the images can be manipulated.

The shader 22 is a component that applies the material properties to the 3D objects. The shader 22 uses the attribute values generated by the attribute sampler 20 and applies them to the objects 12. This results in different material appearances for each object, depending on the selected material properties.

Next, the renderer 24 is configured to generate rendered images 26. The renderer 24 uses the objects 12, environments 14, camera sampler 18, and shader 22 to generate the rendered images. The renderer 24 applies the selected environment to the scene, places the object in the scene according to the camera parameters generated by the camera sampler 18, and then applies the shader 22 to the object. The resulting rendered images 26 depict the objects with different material properties in different environments and from different camera viewpoints.

Each rendered image 26 can then be labeled with the corresponding attribute value(s) for each material property. This provides a ground truth for the training of the diffusion model. The labeled rendered images 26 can then be used as input to the denoising diffusion model, which is trained to predict the material properties of an object in an image.

In this way, Figure 1 illustrates an exemplary process for the generation of synthetic training data that can be used to train an image-to-image diffusion model according to the present disclosure. The training data includes a wide variety of images that depict different objects with different material properties, in different environments, and from different camera viewpoints. This rich and diverse training data can enable the trained diffusion model to generalize well to real-world images and to accurately manipulate material properties in such images.

It should be noted that the process depicted in Figure 1 is merely an example and that variations and modifications are possible. For instance, additional steps can be included in the process, such as steps for preprocessing the 3D objects, steps for postprocessing the rendered images, or steps for augmenting the training data. Furthermore, the process can be executed in a different order or in parallel, depending on the specific requirements of the application. The components depicted in Figure 1 (e.g., objects 12, environments 14, materials 16, camera sampler 18, attribute sampler 20, shader 22, renderer 24) can also be implemented in various ways using various types of hardware and/or software, depending on the specific requirements of the application.

Example Model Training

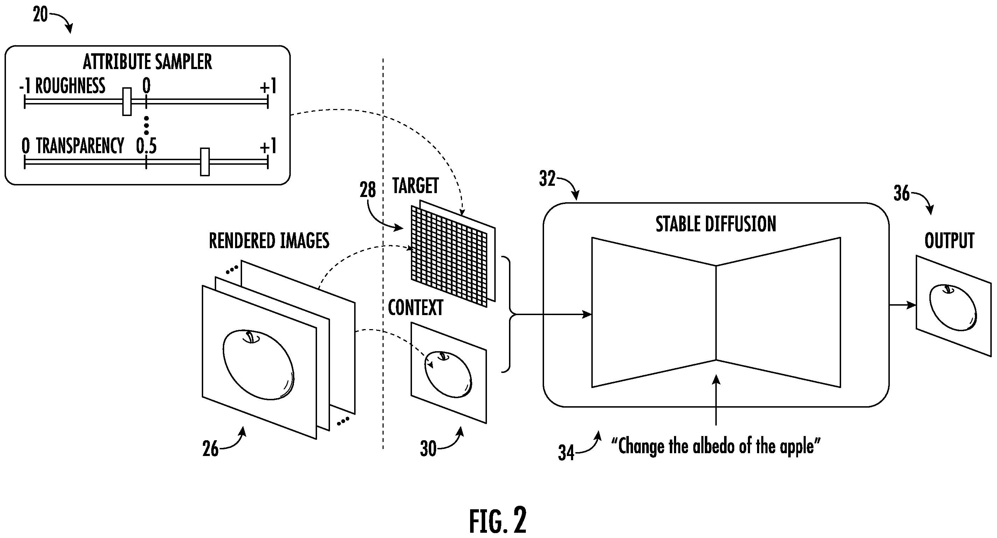

Referring now to Figure 2, Figure 2 illustrates an exemplary process for training a denoising diffusion model according to an embodiment of the present disclosure. The process begins with obtaining a pair of training images from a set of rendered images 26. Each image in the set of rendered images can have an associated attribute value that was created by an attribute sampler 20 when the images 26 were rendered.

In particular, each pair of training images obtained from the set of rendered images 26 can include a target image 28 and a context image 30. Both images depict the same object but the material property of the object differs between the target image and the context image. This difference can be the result of applying different attribute values for a particular material property in each image.

In some implementations, the context image 30 can depict the object having a base material property (e.g., with an attribute value set to zero). In contrast, the target image 28 can depict the object having an altered or edited material property (e.g., with the attribute value set to a non-zero value).

The target image 28 and context image 30 are then provided as input to a denoising diffusion model 32. The diffusion model 32 is a machine learning model specifically designed for image generation and editing tasks. It can take as input a noisy image and apply a sequence of denoising operations to progressively generate a clean, final image. In the illustrated figure, the denoising diffusion model 32 is conditioned on the context image 30, which provides the model with information about the scene, the object, and its initial material properties.

In particular, noise can be added to the target image 28 before it is processed by the denoising diffusion model 32. The noised target image is then processed by the diffusion model 32 to generate a denoising prediction. The denoising prediction is a version of the noised target image where the noise has been removed or reduced by the model. The denoising prediction represents the model's best guess at the clean, original version of the target image based on its current parameters and the given conditioning information.

In some implementations, in addition to the context image 30, the diffusion model 32 is also conditioned on a text prompt 34. The text prompt 34 can provide high-level instructions or guidelines about the desired edits to the material properties of the object in the image. For example, the prompt can be something like "make the object more metallic" or "increase the roughness of the object by 0.2 units". The text prompt 34 can be encoded into a format suitable for the model, such as a vector representation obtained from a language model or word embedding model.

In addition or alternatively to the text prompt 34, the scalar attribute value for the target image can be provided as a conditioning input to the diffusion model 32 and, in this case, can be referred to as a scalar edit value. This is shown in Figure 2 by the dashed line from the attribute sampler 20 to the additional channel depicted behind the noised target image 28.

In some examples, the denoising prediction is a set of predicted noise that, when removed from the noised target image 28, results in a predicted denoised image 36. In other examples, the diffusion model 32 can directly predict the denoised image 36. The denoised image 36 can be the model's attempt to remove noise from the noised target image 28 to produce an image that depicts the object with the specified material property edits (e.g., in accordance with the text prompt 34 and or scalar edit value).

The model's performance is evaluated by computing a loss function that compares the denoising prediction to the set of noise added to the target image. The loss function can be any suitable function that measures the difference or discrepancy between two images, such as the mean squared error or cross-entropy loss. A lower loss value indicates that the model's prediction is closer to the target image, meaning that the model has done a better job of denoising the image.

Based on the computed loss, one or more values of one or more parameters of the diffusion model 32 are modified. This modification can be performed using any suitable optimization algorithm, such as stochastic gradient descent or Adam optimization. By adjusting the model's parameters in this way, the performance of the model can be improved over time. This can enable the model to generate increasingly accurate denoising predictions.

At the end of the process, an edited image 36 is generated based on the denoising prediction. The edited image 36 depicts the same object as in the context image 30 but with the material property of the object modified according to the instructions provided in the text prompt 34. The edited image 36 can be viewed as the output of the diffusion model 32, representing the result of the desired edit to the material property of the object in the image.

It should be understood that the components depicted in Figure 2 and the associated processes described herein are exemplary and that changes and modifications can be made without departing from the scope of the present disclosure. For example, the specific types of material properties and the method of generating the attribute values can vary depending on the specific requirements of the application. Additionally, the specific architecture and configuration of the diffusion model 32 can vary, and other types of image generation or image editing models can be used instead.

Example Use of Trained Model

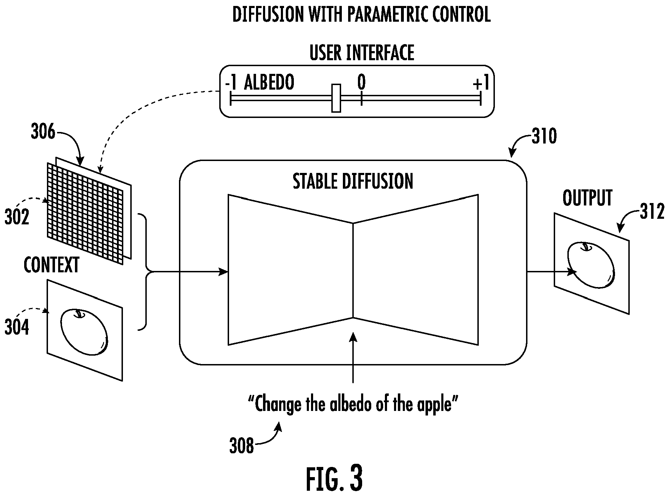

Turning now to Figure 3, Figure 3 illustrates an example process for using a trained diffusion model to perform material edits according to example embodiments of the present disclosure. The process begins with a noisy input 302, which can be an image that contains a certain amount of noise or, in other cases, may be solely noise (e.g., Gaussian noise). This noisy input 302 serves as a starting point for the image editing process. The noisy input 302 is fed into the diffusion model 310, which is designed to remove the noise and generate a clean image.

The process also involves a context image 304, which is used to condition the diffusion model 310. The context image 304 provides a reference for the diffusion model 310, guiding the model in its task of denoising the noisy input 302. The context image 304 can be the same as the noisy input 302 or it can be a different image that depicts the same or a similar object. The context image 304 can include additional information about the object, such as its shape, size, orientation, lighting conditions, and initial material properties.

In some implementations, the user can provide a scalar edit value 306, which specifies the desired change to a material property of the object in the image. The scalar edit value 306 can be a numerical representation of the desired change, such as an increase or decrease in the roughness, metallic, albedo, or transparency of the object. The scalar edit value 306 can be provided to the diffusion model 310 as an additional input, supplementing the information provided by the context image 304 and the noisy input 302. For instance, a user could provide a scalar edit value 306 of 0.5 to increase the metallic property of an object in the image by 50%. In some implementations, the scalar edit value 306 can be provided using a slider user interface as shown.

Another form of user input to the diffusion model 310 can be a textual prompt 308. The textual prompt 308 can provide high-level instructions or guidelines about the desired edits to the material properties of the object in the image. For example, the textual prompt 308 could be "Make the object more metallic" or "Increase the roughness of the object by 0.2 units". The textual prompt 308 can be encoded into a format suitable for the model, such as a vector representation obtained from a language model or word embedding model.

The diffusion model 310 processes the noisy input 302, the context image 304, the scalar edit value 306, and the textual prompt 308 to generate an edited image 312. The edited image 312 depicts the same object as in the context image 304, but with a modified material property. The material property of the object in the edited image 312 is modified according to the instructions provided in the textual prompt 308 and the scalar edit value 306.

The diffusion model 310 operates by removing the noise from the noisy input 302 and adjusting the material property of the object in accordance with the scalar edit value 306 and the textual prompt 308. The diffusion model 310 generates the edited image 312 that depicts the object with the desired material property. For instance, the edited image 312 could depict an object that was originally wooden in the context image 304 and the noisy input 302, but now appears to be made of metal in the edited image 312.

It should be noted that the components of Figure 3 and the associated processes described herein are exemplary and that changes and modifications can be made without departing from the scope of the present disclosure. For example, the noisy input 302 and the context image 304 can be different images depicting the same object or different objects with similar material properties. The scalar edit value 306 can be any numerical value that represents a desired change in a material property, and the textual prompt 308 can contain any textual instruction that describes a desired edit to a material property.

Example Implementation Details

Some example implementations opt to render a synthetic dataset, giving full control of material attributes. Using this data, some example implementations can perform material attribute control given a context image, instruction, and a scalar value defining the desired relative attribute change. Some example methods are based on latent diffusion model for text-to-image generation with modification that allows conditioning the network on the relative attribute strength.

*Example Datasets*:

Some example implementations can render a dataset with the Cycles renderer from Blender, using publicly available 3D assets, physically-based materials, and environment maps. Each scene can begin with one of 100 unique object meshes from polyhaven.com. Each of these can be paired with five randomly chosen materials of the 1200 available from ambientcg.com, and illuminated with one of 400 environment maps. The material can be a Principled BRDF shader node, the base shader in Blender. The base configuration of the material can be kept as a control defined as 0 strength change for each of the attributes. This control can serve as the context input image to the method against which relative changes in roughness, metallic, albedo, and transparency are applied, sampling 10 random relative values for each attribute, the details of which are described below. Finally, some example implementations can render 15 images of each setup using different camera viewpoints and intrinsics. This creates a wide combination of scenes with diversity in material, lighting, and background conditions.

Roughness and Metallic: For both roughness and metallic properties, some example implementations can operate in an additive framework. In the case when the material has the associated map for roughness or metallic, some example implementations can use an additive node yielding a parametric control between [-1, 1]. For materials where either of these spatial maps are missing, some example implementations can control the attribute control directly as a constant map, assuming the base 0.5 as the control state of the attribute. Note that these values are clamped between [0, 1] so in some cases, further increasing or decreasing the roughness does not result in any change in the rendered image. Some example implementations can account for this by under-sampling such images where the gradient of change is constant.

Reducing the roughness value can result in a surface that reflects light more uniformly and sharply, giving it a glossy or shiny appearance. On the other hand, increasing the roughness value can lead to a more diffused light reflection, making the surface appear matte or dull. Low metallic value can result in appearance predominantly determined by the base color, as in the case of plastic and wood. Increasing the metallic can lead to the surface absorbing more of the incoming light, resulting in a darker appearance of the object.

Albedo: Some example implementations can implement a color mixing between the original albedo map of the object and a spatially constant gray (RGB = 0.5) albedo map. The parametric controller can operate between 0 and 1, where 0 corresponds to the original albedo, and 1 corresponds to completely gray albedo. This can be considered as detexturing the albedo and can be interesting when combined with roughness and metallic parameters to achieve a mirror-like or a shading-only image.

Transparency: Some example implementations can introduce the ability to control transparency by controlling the transmission value in the BSDF shader node. The attribute value can be chosen to be in range [0, 1]. For a chosen transmission value t, some example implementations can reduce the roughness and metallic component in an additive manner by t, and also add a white overlay to the albedo to increase the intensity of the appeared color. For the value of 0, some example implementations can expect the same opaque object and at 1, some example implementations can get a transparent version of the object, making it appear as if it was made of glass. Note that some example implementations can retain the effect of the albedo resulting in a fine tint on the object.

*Example Parametric Control in Diffusion Models*:

The rendered synthetic data can be used to finetune an image-to-image diffusion model conditioned on relative attribute strength and a generic text instruction providing parametric control over material properties. Some example implementations can operate in latent space using a text-to-image latent diffusion model.

Diffusion models can perform sequential denoising on noisy input samples, directing them towards the dataset distribution by maximizing a score function. A noising process is defined over timesteps $t \in T$, resulting in a normal distribution at $T$. Some example implementations can operate in latent space by using a pre-trained variational encoder $\varepsilon$ and decoder D , a potent aid to conditional image generation. An example training approach can draw an image sample I from the dataset, encode it into a latent $z = \varepsilon(\mathbf{I})$, then noise it at $t$ as $z_t$. A denoising network $\varepsilon_\theta$ can predict the added noise given the latent $z_t$, diffusion time t, and conditioning variables.

One example image-to-image model proposed herein is conditioned on an input image to be edited, provided as $\varepsilon(I_c)$ concatenated to the latent being denoised $z_t$. Text conditioning can be provided via cross-attention layers using a generic prompt, e.g., $p$ = "Change the < *attribute_name* > of the < *object_class* >." Since textual CLIP embeddings do not encode fine-grained information well, prompt-only conditioning of s expressed textually (e.g., "Change the roughness of the apple by 0.57.") yields inconsistent output. To facilitate relative attribute strength conditioning, some example implementations can also concatenate a constant scalar grid of edit strength s.

Some example implementations can initialize the weights of the denoising network with a pre-trained model (e.g., a pre-trained checkpoint of InstructPix2Pix), providing an image editing prior and understanding of instructive prompts. During training, some example implementations can minimizes the following example loss:

$$\mathcal{L} = \mathbb{E}_{\mathcal{E}(I),\mathcal{E}(I_c),\mathbf{s},p,\varepsilon\sim\mathcal{N}(0,1),t}[||\varepsilon - \varepsilon_\Theta(z_t, t, \mathcal{E}(I_c), \mathbf{s}, p)||_2^2]$$

Some example implementations can always provide the s = 0 image as context $I_c$, and draw an edited image $I_e$ at random for noising. Since some example implementations can always render an s = 0 sample, and other s are chosen with stratified sampling, some example distributions have a slight bias towards zero. Since many edit strengths may have little effect (e.g., some example implementations cannot lower the roughness of an object with 0 roughness), providing too many of these examples biases the network towards inaction. Some example implementations can therefore downweight such null examples, e.g., defined as $\|I_c - I_e\|^2 < \tau$, by $w_{null}$ via rejection sampling. As one example, some example implementations can set $w_{null}$ = 0.80, $\tau$ = 0.05. Some example implementations can train with $fp$16 precision for 10k steps using Adam and learning rate of 5e-5. Some example implementations can use the text encoders and noise schedule from pre-trained models.

At test time some example implementations can provide a held out image as context $I_c$, edit strength s, and prompt $p$ for the object class of the input image. Some example implementations can denoise for 20 steps using the DPM-solver+ + based noise scheduler.

Multi-attribute editing: Some example implementations can edit multiple attributes in a single diffusion pass by concatenating more than one edit strength, drawn from $\{s_a, s_r, s_m\}$ giving $[z_t|\varepsilon(I_c)|\mathbf{s}]$ as the final input (e.g., UNet input), where | is concatenation.

Classifier-free guidance: Classifier-free guidance (CGF) was proposed to improve visual quality and faithfulness of images generated by diffusion models. Some example implementations can retain the same CFG setup as InstructPix2Pix for both image and prompt conditioning. Some example implementations do not, however, impose CFG with respect to the relative attribute strengths s. Some example implementations can force the network to be faithful to edit strength and reason about incoming material attributes. As s can be 0 by definition of the problem itself, and downweighted as described above, some example implementations do not apply CFG on s.

Example Devices and Systems

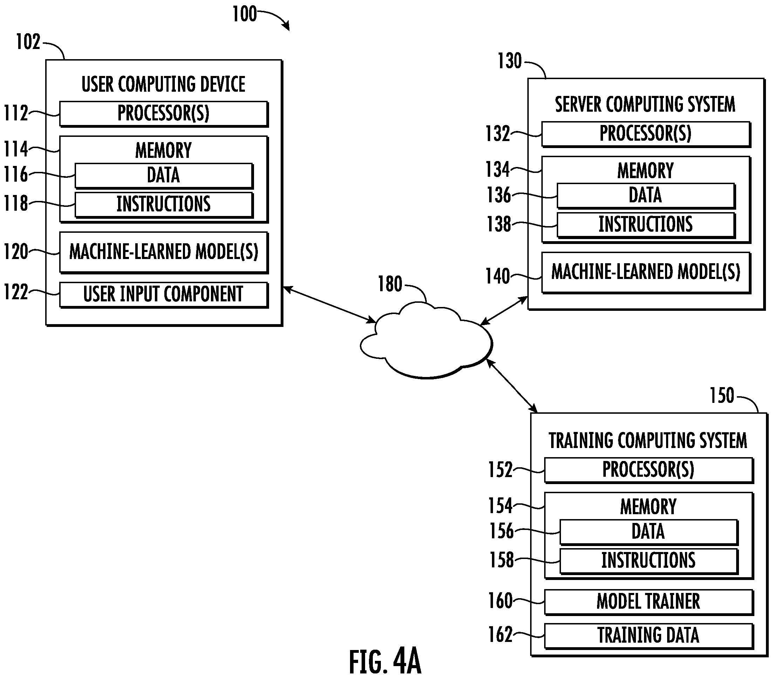

Figure 4A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example machine-learned models 120 are discussed with reference to Figures 1-3.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120 (e.g., to perform parallel image generation or editing across multiple instances of inputs).

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service (e.g., an image generation or editing service). Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 1-3.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. The training data 162 can include, for example, pairs of images generated using a physically-based render. Each pair of images can depict the same object but with different material property values.

In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 4A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

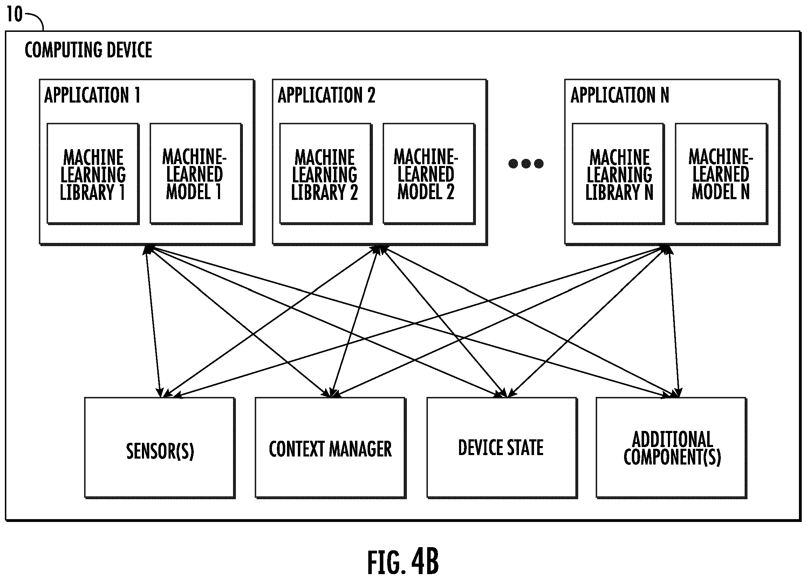

Figure 4B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 4B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

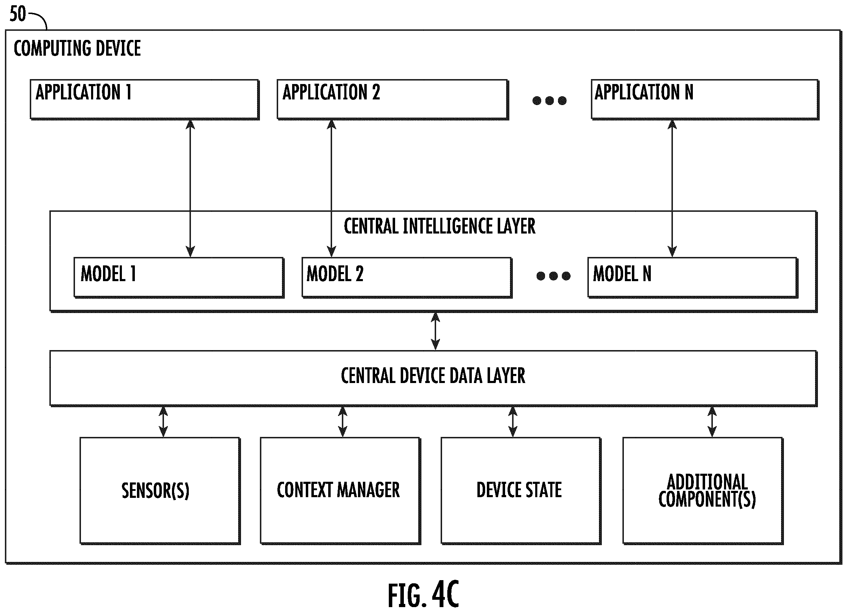

Figure 4C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 4C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 4C, the central device data layer can communicate with a number of other components of the computing device, such as, for example, one or more sensors, a context manager, a device state component, and/or additional components. In some implementations, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A computer-implemented method to train a diffusion model to perform visual editing of material properties, the method comprising:

    obtaining, by a computing system comprising one or more computing devices, a pair of training images, wherein the pair of training images comprises a target image and a context image, wherein the target image and the context image each depict a shared object, and wherein a material property of the shared object differs between the target image and the context image;
    adding, by the computing system, a set of noise to the target image to obtain a noised target image;
    processing, by the computing system, the noised target image with a denoising diffusion model that is conditioned on the context image to generate a denoising prediction;
    evaluating, by the computing system, a loss function that evaluates the denoising prediction relative to the set of noise; and
    modifying, by the computing system, one or more values of one or more parameters of the denoising diffusion model based on the loss function.

2. The computer-implemented method of any preceding claim, wherein the denoising diffusion model is further conditioned on a textual prompt that indicates an edit to the material property.

3. The computer-implemented method of any preceding claim, wherein the denoising diffusion model is further conditioned on a scalar edit value for the material property, wherein the scalar edit value corresponds to the material property exhibited by the target image.

4. The computer-implemented method of claim 3, wherein the scalar edit value is provided to the denoising diffusion model in an additional input channel.

5. The computer-implemented method of any preceding claim, wherein the pair of training images were generated using a physically-based renderer, wherein the physically-based renderer comprises a shader, and wherein the shader was supplied with different values for the material property of the shared object when rendering the target image and the context image.

6. The computer-implemented method of claim 4, wherein the shader was supplied with a value of zero for the material property of the shared object when rendering the context image.

7. The computer-implemented method of any preceding claim, wherein the material property comprises one or more of roughness, metallic property, albedo, and transparency.

8. The computer-implemented method of any preceding claim, wherein the denoising diffusion model comprises a latent diffusion model and the set of noise is added in a latent space.

9. A computing system comprising:

    one or more processors; and
    one or more non-transitory computer-readable media that collectively store:

        a denoising diffusion model configured to perform visual edits to a material property of an object depicted in a context image;
        instructions that, when executed by the computing system, cause the computing system to perform operations, the operations comprising:

receiving the context image;
processing an input with the denoising diffusion model to generate an edited image, wherein the denoising diffusion model is conditioned on the context image, and wherein the edited image depicts the object with a modified material property; and
providing the edited image as an output.

10. The computing system of claim 9, wherein the denoising diffusion model has been trained according to the method of any of claims 1-8.

11. The computing system of claim 9 or claim 10, wherein the input comprises a noise input and one or both of:

a textual prompt that describes an edit to the material property; and
a scalar edit value for the material property.

12. The computing system of claim 11, wherein the input comprises the scalar edit value, and wherein the scalar edit value is provided to the denoising diffusion model in an additional input channel.

13. The computing system of any of claims 9-12, wherein the material property comprises one or more of roughness, metallic property, albedo, and transparency.

FIG. 1

**FIG. 2**

EP 4 560 578 A1

DIFFUSION WITH PARAMETRIC CONTROL

USER INTERFACE

-1 ALBEDO　　　0　　　+1

STABLE DIFFUSION

OUTPUT

CONTEXT

"Change the albedo of the apple"

FIG. 3

EP 4 560 578 A1

FIG. 4A

FIG. 4B

EP 4 560 578 A1

COMPUTING DEVICE

50

| APPLICATION 1 | APPLICATION 2 | ••• | APPLICATION N |

CENTRAL INTELLIGENCE LAYER

| MODEL 1 | MODEL 2 | ••• | MODEL N |

CENTRAL DEVICE DATA LAYER

| SENSOR(S) | CONTEXT MANAGER | DEVICE STATE | ADDITIONAL COMPONENT(S) |

FIG. 4C

Europäisches
Patentamt

European
Patent Office

Office européen
des brevets

## EUROPEAN SEARCH REPORT

**Application Number**

EP 24 21 4883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BROOKS TIM ET AL: "InstructPix2Pix: Learning to Follow Image Editing Instructions", 2023 IEEE/CVF CONFERENCE ON COMPUTER VISION AND PATTERN RECOGNITION (CVPR), IEEE, 17 June 2023 (2023-06-17), pages 18392-18402, XP034402886, DOI: 10.1109/CVPR52729.2023.01764 [retrieved on 2023-08-22] * page 18392 - page 18397 * ----- | 1-13 | INV. G06T11/00 G06T5/60 G06T5/70 |
| A | Chen Yongwei ET AL: "TANGO: Text-driven Photorealistic and Robust 3D Stylization via Lighting Decomposition", , 28 November 2022 (2022-11-28), pages 1-14, XP093266122, Retrieved from the Internet: URL:https://proceedings.neurips.cc/paper_files/paper/2022/file/c7b925e600ae4880f5c5d7557f70a72b-Paper-Conference.pdf * page 1 - page 2 * ----- | 1-13 | |
| A | ZHANG KAI ET AL: "PhySG: Inverse Rendering with Spherical Gaussians for Physics-based Material Editing and Relighting", 2021 IEEE/CVF CONFERENCE ON COMPUTER VISION AND PATTERN RECOGNITION (CVPR), IEEE, 20 June 2021 (2021-06-20), pages 5449-5458, XP034008144, DOI: 10.1109/CVPR46437.2021.00541 [retrieved on 2021-10-15] * page 5449 - page 5450 * ----- | 1-13 | **TECHNICAL FIELDS SEARCHED (IPC)**<br><br>G06T |

The present search report has been drawn up for all claims

| Place of search | Date of completion of the search | Examiner |
|---|---|---|
| Munich | 4 April 2025 | Maier, Werner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)